# EUROPEAN PATENT APPLICATION

(11) **EP 2 022 650 A1**
(43) Date of publication of application: **11.02.2009**
(21) Application number: 08161762.3
(22) Date of filing: 04.08.2008
(51) Int. Cl.: B60C 15/00, B60C 17/00

(54) **Pneumatic tire**

(30) Priority: 06.08.2007 US 834185
(71) Applicant: The Goodyear Tire & Rubber Company, Akron, Ohio 44316-0001 (US)
(72) Inventor: Losey, Robert Allen, Kent, OH 44240 (US); Bachir, Mohamad Afif, Medina, OH 44256 (US); Laske, Richard Frank, Akron, OH 44313 (US)
(74) Representative: Kutsch, Bernd

(57) **Abstract**

A tire (10) comprises two sidewalls (40), two opposing bead portions (14), and a reinforcement ply (12) anchored in each bead portion (14). Each bead portion (14) has a profile that has an axially outer end closer to the axis of rotation of the tire (10) than the axially inner end thereof, a bead ring (24) and a rubber component (26), wherein in each bead portion (14) the reinforcement ply (12) has a downturn portion (12a) and a turn-up portion (30), and wherein the turn-up portion (30) passes radially inward and at least partially around the bead ring (24) and terminates at a terminal end (32). The terminal end (32) is located within the range of from the radially innermost portion of the bead portion (14) to a radial distance, as measured from the radially outermost location of the bead ring (24) to the terminal end (32), of two radial bead ring diameters and/or the downturn portion (12a) is located axially inward of the rubber component (26) and the terminal end (32) is axially spaced from the downturn portion (12a) an axial distance which is at least 80% of the axial bead ring diameter.

## Description

### Field of the Invention

The present invention relates to a pneumatic radial tire, and more particularly, to the structure of the beads and carcass reinforcement means of the pneumatic radial tire.

### Background of the Invention

A tire with a radial carcass reinforcement usually comprises a reinforcing bead core in each bead portion of the tire, about which the carcass reinforcement is anchored by winding or forming an upturn. The bead cores provide a clamping force for the tire when the tire is mounted upon the beads seats of a wheel rim. The clamping produces a certain compression of the bead portion between the bead core and the wheel rim, the clamping generally being brought about by a difference in the angles of the bead seat and the rim seat respectively, and/or by a difference in the diameters of said seats.

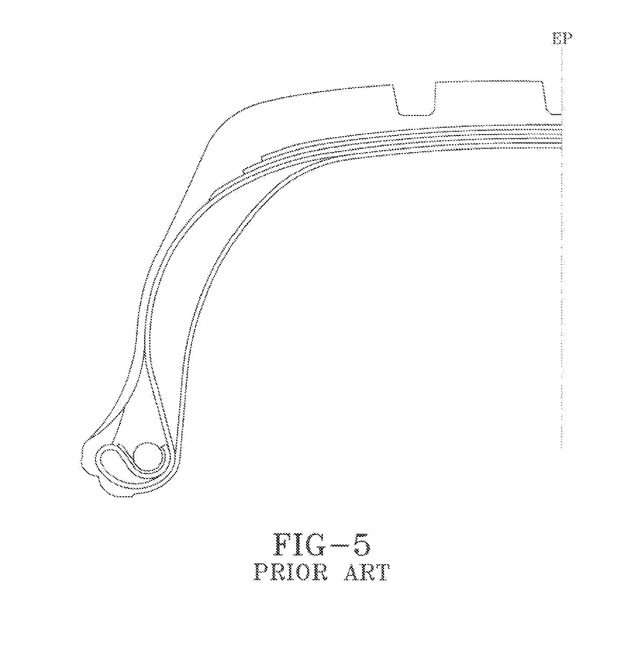

The bead clamping force of the tire is particularly important in designing a run-flat tire or tire system. One such tire system that uses the clamping force to maintain operation of the tire during underinflated or uninflated operating conditions is disclosed in US-A- 5,785,781 and US-A- 5,971,047. The radial carcass reinforcement of the tire, which is anchored within each bead to at least one inextensible annular reinforcement element, has a profile, when the tire is mounted on its operating rim and inflated to its operating pressure, with a direction of curvature which is constant in the sidewalls and bead regions which ends in the bead toe. The preferred bead region of this type of tire is more fully disclosed in US-A- 5,971,047, wherein the carcass reinforcement has a hooking structure, and which is also shown in Figure 5.

In the tire of the above disclosed run-flat system, when the tire system is inflated at reduced or zero pressure, the beads of the tire remain in place when traveling because the structure creates an increase of the clamping of the bead toe on the mounting rim as a function of the tension of the carcass reinforcement. The structure also makes it possible to have initial clamping on rim of low value, given that said clamping will increase when the tire is inflated to its recommended pressure.

However, due to the turn back of the carcass reinforcement ply below the bead core, the above tire structure is complicated and difficult to manufacture in an accurate and consistent basis. Further, the tire structure requires the use of non-standard tire building machinery such as special tire building drums. Thus a simpler tire structure design that does not require special tire building machinery yet retains the bead clamping benefits is desired.

### Summary of the Invention

The present invention is directed toward a tire according to claim 1. Preferably, said tire is a pneumatic run-flat tire. Depending claims refer to preferred embodiments of the invention.

### Brief Description of the Drawings

The invention will be described by way of example and with reference to the accompanying drawings in which:
FIG. 1 is a cross sectional view of a tire half;
FIGS. 2 and 3 are cross sectional views of alternative tire beads;
FIG. 4 is a cross sectional view of a tire; and
FIG. 5 is a cross sectional view of a prior art tire half.

### Detailed Description of the Invention

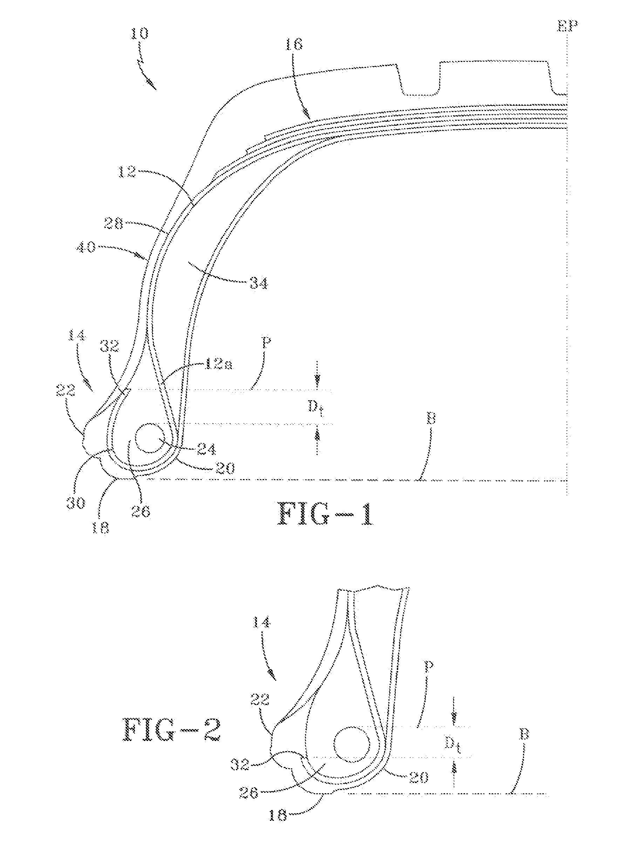

FIG. 1 illustrates as one embodiment of the invention one half of a pneumatic tire 10 capable of operating during reduced inflation pressure conditions; this type of tire is often referred to as a self-supporting tire or run-flat tire. The tire 10 has at least one radial carcass reinforcement ply 12 that extends from one bead portion 14 to an opposing bead portion, passing through the crown region of the tire 10. The carcass reinforcement ply 12 is formed of parallel reinforcing cords; the cords are preferably inclined at angles of between 65° to 90° with respect to the equatorial plane EP of the tire 10. In the crown region of the tire 10, radially outward of the carcass reinforcement ply 12, is a belt structure 16. The belt structure 16 preferably has at least two plies of reinforcing cords. The cords in each ply are preferably crossed, relative to the cords in the adjacent belt ply.

The bead portion 14 has an outer cross-sectional profile wherein as the profile moves from the axially outer side of the bead portion 14 to the axially inner side, the bead profile slopes radially upward, resulting in the bead toe 18 being both axially outward and radially inward of the bead heel 20. Above the bead toe 18 is a rib 22 that assists in locking the tire onto a wheel rim having a correspondingly profiled bead rim seat. This bead profile is contrary to a conventional tire wherein the bead toe is radially and axially inward of the bead heel and wherein the bead heel fits into the curved portion of the wheel rim where the rim seat and the wheel flange meet. In addition to the carcass reinforcement ply 12, the bead portion 14 contains therein a bead ring 24. The illustrated bead ring 24 has a circular configuration and is formed of a plurality of steel wires or cords. However, the ring 24 may have a different cross-sectional configuration and be formed from alternative materials. The bead ring 24 is located within a preferably hard elastomeric component 26; the elastomeric component 26 surrounds the bead ring 24 all on sides and the geometric center C of the bead ring 24 is preferably axially offset from the axial center of the component 26, as measured along the greatest width of the component 26. The axial offset may be in a range of 2 to 10 mm such as 3 to 6 mm. The component 26 preferably extends radially upwards in an essentially triangular like fashion.

The carcass reinforcement ply 12 has a main portion 28 extending about the main toroidal portion of the tire 10. The turn-up portions 30 of the carcass reinforcement ply 12 are the outer ends of the reinforcement ply 12, each turn-up portion 30 passes radially under the bead ring 24 and component 26. When the tire 10 is mounted on a corresponding wheel (not illustrated), as the carcass reinforcement ply 12 is placed in tension by air pressure inside the tire 10, the reinforcement ply main portion 28 is expanded radially outward. As the main portion 28 expands, it pulls on the turnup portion 30, pulling the bead toe 18 radially inward into the wheel rim and flange, effectively acting to lock the bead portion 14 of the tire 10 onto the wheel.

In the tire of FIG. 1, the turn-up portion 30 of the carcass reinforcement ply 12 extends from axially inward of the bead ring 24 to axially outward of the bead ring 24, and extends radially outward along the axially outer side of the component 26. The terminal end 32 of turn-up portion 30 is located radially inward of a line P, the line P being parallel to the bead base line B and spaced a distance Dt from the radially outermost location of the bead ring 24. The distance Dt may range from zero to 2 times the diameter Db of the bead ring 24. Preferably, the terminal end 32 of the ply 12 is positioned so that it is axially spaced from the ply in the downturn portion 12a. Preferably, the axial spacing is greater than or equal to the bead ring width. This limitation on the location of the terminal end 32 limits the terminal end 32 to a location near the bead core. In the illustrated tire, as the component 26 has a radial height greater than distance Dt outward of the bead ring 24, the component 26 is not fully enveloped by the turn-up portion 30.

In each tire side, preferably axially inward of the main carcass portion 28, there is preferably at least one insert 34. The insert 34 has a curved configuration with the middle third of the insert 34 having a substantially constant thickness and the ends of the insert 34 being tapered. The insert 34 extends from the bead portion 14 to radially inward of the belt structure 16. When the insert 34 extends through the entire sidewall, it has a radially inner end located axially inward of the bead ring 24. The insert 34 is formed from a hard rubber, with a Shore A hardness at 100° C in a range of 55 to 90, with a preferred range of 60 to 70. Regarding additional properties of the insert 34, the properties disclosed in US-A- 6,230,773 are suitable for the insert 34 of the present invention. The properties may be achieved by the compound disclosed in this reference, or other compounds may be selected which yield the disclosed properties. The rubber forming the insert 34 may also be flock loaded or blended with reinforcing fibers. Fibers useful may be either natural or man-made, and are characterized by having a length at least 100 times its diameter or width. Flock are particles smaller than fibers. And either may be formed from cotton, aramid, nylon, polyester, PET, PEN, carbon fiber, steel, fiberglass, or any combination thereof. The fiber or flock loading of the rubber is in the range of 5 to 35 parts per hundred parts rubber. The insert's lenticular configuration maintains the carcass main portion in a desired configuration.

In the embodiment illustrated in FIG. 2, the reinforcement ply turn-up 30 passes radially inward of the bead ring 24, along the outer surface of the component 26, with the terminal end located axially outward of the bead ring 24 and radially inward of the line P. In contrast to the prior art tire (see FIG. 5) that has a bead profile similar to the tire 10, in the present tire 10, the turn-up portion 30 does not pass back under the bead ring 24, nor is it located within, or sandwiched or enveloped by the component 26.

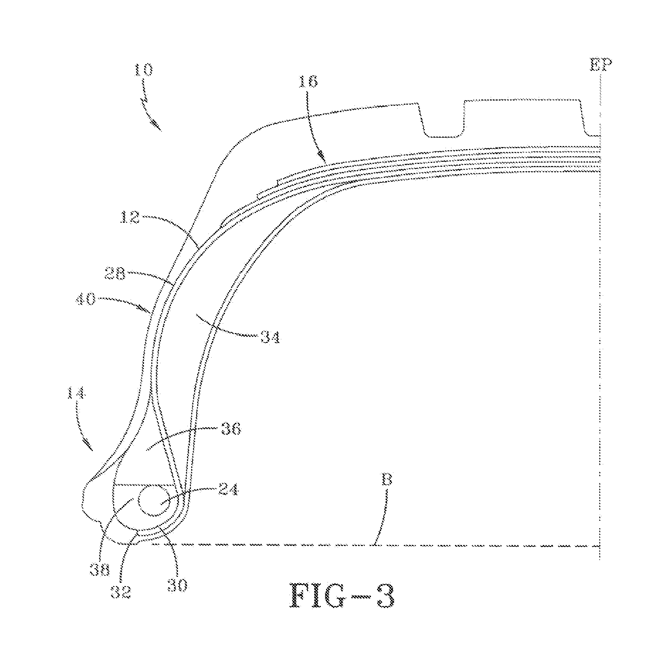

In the tire bead of FIG. 3, the reinforcement ply turn-up 30 passes under the bead ring 24 and has its terminal end 32 radially inward of the bead ring 24 and axially outward of the geometric center of the bead ring 24.

In FIGS. 1 and 2, the rubber component 26 is illustrated as a single component in which the bead ring 24 is embedded. When formed as a single component, the component 26 replaces the conventional apex and the hard rubber talon. To vary the stiffness characteristics of the bead region 14, the component 26 may be formed as using multiple elastomeric compounds. The bead region 14 of FIG. 3 shows the region partially enveloped by the carcass reinforcement ply 12 and containing the bead ring 24 therein is formed of two different rubber elements 36, 38. The upper element 36, i.e. the apex, is radially outward of the radially outermost point of the bead ring 24 and has a flat base that extends radially inward of the line P. The lower element 38, i.e. the talon, fully encompasses the bead ring 24. The lower element 38 is formed from an elastomer having a greater Shore A hardness than that of the upper element 36.

In comparison to the prior art tire, FIG. 5, that requires the reinforcement ply turnup to be turned back around a hard rubber component and back under the bead ring, the tire 10 provides for greater ease in manufacturing and also providing for improved uniformity in the tire manufacturing as the turn-up portion location can be readily seen by the tire builder when assembling the bead portion 14 of the tire. Additionally, the tire bead portion may be assembled without having to expand the tire prior to assembly of the bead portion.

An important requirement of a tire that it stays on the wheel rim while pressurized and under load; i.e. the tire must stay seated. To test for this, tires are subjected to a bead unseat resistance test. In the test, depending on the tire size, the tire is inflated to a pressure greater than the recommended operating inflation pressure, the pressure being dependant upon the tire size and tire application. For a tire of the type and general size disclosed herein, the tire should not unseat at pressures less than 160 psi (1100 kPa). Because the turn-up of the disclosed tire has a different configuration than the configuration turn-up for this type of bead profile, the reinforcement ply, under tension, may function differently. Bead unseat pressures were determined by computer FEA analysis for the disclosed tire and the prior art tire (identified below as the control tire).

The only variation in the tires identified in the table below is the turn up structure path and placement.

| | Turn up Structure | Unseat Pressure, psi (kPa) |
|---|---|---|
| Control | As illustrated in Figure 5 | 207 psi (1425 kPa) |
| A | Terminal point at mid-tire height, axially outward of component 26, and radially outward of line P | 133 psi (917 kPa) |
| B | Terminal point at 11.5 mm above bead ring 24, tangent to line P, FIG 1 | 195 psi (1344 kPa) |
| C | Terminal point adjacent to bead ring 24, inward of line P, FIG. 2 | 205 psi (1413 kPa) |
| D | Terminal point radially inward of bead ring 24 and line P, FIG. 3 | 205 psi (1413 kPa) |

From the above results, it can be seen that, when the terminal point 32 of the turn-up portion 30 extends too high up into the sidewall 40 and thus closer to the ply down turn portion 12a, the bead unseat pressure is significantly reduced and is below the desired minimum unseat pressure. As the terminal point of the turn up is radially lowered, and is at or below the line P, the unseat pressure is above the minimum value and is comparable to the control tire. Thus, the tire seating characteristics are maintained, while the ease and uniformity in manufacturing is improved.

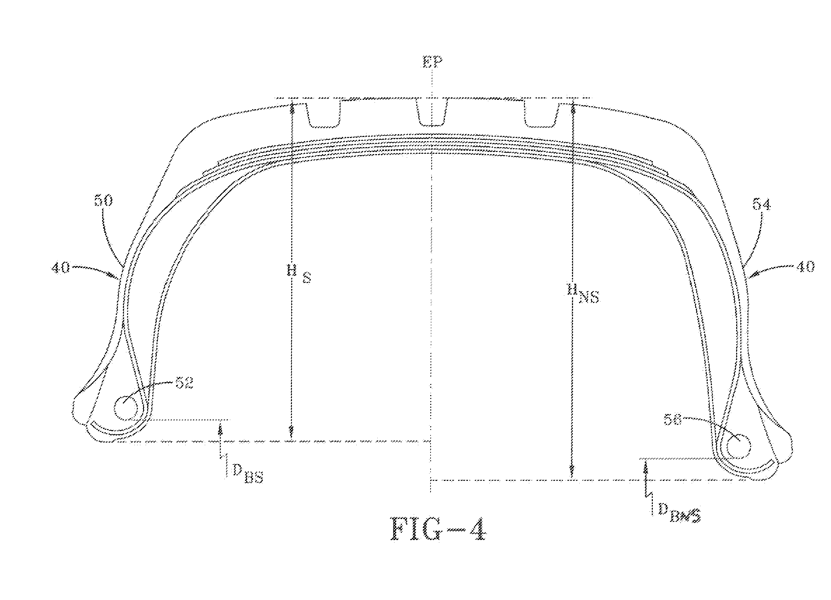

For each of the tires illustrated and discussed above, the opposing bead rings 24 and sidewalls 40 may have an identical diameter and height, respectively; that is, the non-illustrated portion of the tire is a mirror image of that illustrated. However, it is also within the scope of the present invention to form any of the discussed tires such that the diameters of the opposing beads 24 are different, as seen in FIG. 4. The tire of FIG. 4 has a short sidewall 50 with a bead ring 52 of relatively greater diameter D_{BS}, and a long sidewall 54 with a bead ring 56 of relatively smaller diameter D_{BNS}. The tire is mounted on a tire rim having corresponding offset rim diameters to accommodate the different bead diameters.

## Claims

1. A pneumatic tire comprising two sidewalls (40), two opposing bead portions (14), and a reinforcement ply (12) anchored in each bead portion (14), each bead portion (14) having a profile that has an axially outer end closer to the axis of rotation of the tire (10) than the axially inner end thereof, each bead portion (14) having a bead ring (24) and a rubber component (26), wherein in each bead portion (14) the reinforcement ply (12) has a downturn portion (12a) and a turn-up portion (30), wherein the turn-up portion (30) passes radially inward and at least partially around the bead ring (24) and terminates at a terminal end (32), **characterized in that**
a) the terminal end (32) is located within the range of from the radially innermost portion of the bead portion (14) to a radial distance, as measured from the radially outermost location of the bead ring (24) to the terminal end (32), of two radial bead ring diameters; and/or
b) the downturn portion (12a) is located axially inward of the rubber component (26) and the terminal end (32) is axially spaced from the downturn portion (12a) an axial distance which is at least 80% of the axial bead ring diameter.

2. The pneumatic tire of claim 1 wherein the terminal end (32) is located within the range of from the radially innermost portion of the bead portion (14) to a radial distance, as measured from the bead ring center of mass to the terminal end (32), of two radial bead ring diameters.

3. The tire of claim 1 or 2 wherein the terminal end (32) of the reinforcing ply (12) is axially outward of the center of mass of the bead ring (24).

4. The tire of at least one of the previous claims 1 to 3 wherein the terminal end (32) is axially spaced from the downturn portion (12a) an axial distance which is equal or greater than of the axial bead ring diameter.

5. The tire of at least one of the previous claims wherein the terminal end (32) is axially spaced from the downturn portion (12a) an axial distance which is from 90% to 130% of the axial bead ring diameter.

6. The tire of at least one of the previous claims wherein the bead portion (14) comprises a bead toe (18) and a bead heel (20), wherein the bead toe (18) is radially and axially inward of the bead heel (20) and wherein the bead heel (20) fits into a curved portion of a wheel rim where a rim seat and a wheel flange meet.

7. The tire of at least one of the previous claims wherein the cross section of the bead ring (24) has a circular configuration or an at least essentially circular, quadrangular or hexagonal configuration.

8. The tire of at least one of the previous claims wherein the rubber component (26) surrounds the bead ring (24) all on its sides and the axial center of the bead ring (24) is axially offset from the axial center of the rubber component (26).

9. The tire of at least one of the previous claims wherein the rubber component (26) extends radially upwards in a triangular like fashion.

10. The tire of at least one of the previous claims wherein the terminal end (32) of the turn-up portion (30) is located radially inward of a line P, the line P being parallel to a bead base line B and spaced a distance Dt from the radially outermost location of the bead ring (24).

11. The tire of claim 10 wherein the distance Dt ranges from zero to two times, alternatively form 0.5 to 1.5 times, the radial diameter of the bead ring (24).

12. The tire of at least one of the previous claims wherein the terminal end (32) is positioned so that it is axially spaced from the downturn portion (12a).

13. The tire of at least one of the previous claims wherein the rubber component (26) is not fully enveloped by the turn-up portion (30) and the downturn portion (12a).

14. The tire of at least one of the previous claims wherein the turn-up portion (30) does not pass back under the bead ring (24), nor is it located within, or sandwiched or enveloped by the rubber component (26).

15. The tire of at least one of the previous claims wherein the two bead rings (24) have a different diameter.
